# EUROPÄISCHE PATENTSCHRIFT

(11) **EP 0 880 092 B1**
(45) Veröffentlichungstag und Bekanntmachung des Hinweises auf die Patenterteilung: **03.03.2004**
(21) Anmeldenummer: 98440099.4
(22) Anmeldetag: 15.05.1998
(51) Int. Cl.: G06F 9/445, G06F 9/44

(54) **Programmgesteuerte Einrichtung mit Nachlademöglichkeit für und Umschaltemöglichkeit auf zweites Betriebssystem ohne Programmunterbrechung**
Program controlled device whose operating system is capable of being upgraded and the new version switched over to, without having to restart the device
Dispositif à commande programmée avec possibilité de chargement et de mise en opération d'un deuxième système d'exploitation, sans interruption de l'exécution du dispositif

(30) Priorität: 20.05.1997 DE 19720990
(43) Veröffentlichungstag der Anmeldung: 25.11.1998
(73) Patentinhaber: ALCATEL, 75008 Paris (FR)
(72) Erfinder: Wingerath, Norbert, 71701 Schwieberdingen (DE)
(74) Vertreter: Brose, Gerhard, Dipl.-Ing.

(56) Entgegenhaltungen:
- US-A- 4 626 986
- US-A- 5 155 837
- US-A- 5 257 380

## Beschreibung

Die Erfindung betrifft eine programmgesteuerte Einrichtung mit Nachlademöglichkeit für und Umschaltemöglichkeit auf zweites Betriebssystem ohne Programmunterbrechung nach dem Oberbegriff des Anspruchs 1.

Derartige Einrichtungen sind weit verbreitet. Nur beispielhaft wird hier auf die US 5,452,339 verwiesen. Dort wird ein Ablauf beschrieben, mit dem sichergestellt werden soll, daß sich im Falle einer fehlerhaften Umschaltung keine Probleme ergeben. Die Umschaltemöglichkeit selbst wird dabei vorausgesetzt.

Soll eine programmgesteuerte Einrichtung praktisch ununterbrochen verfügbar sein und dennoch von Zeit zu Zeit auf eine andere Programmversion und damit auf ein anderes Betriebssystem umgestellt werden können, so muß es möglich sein, die zweite Programmversion während des Betriebs nachzuladen und dann darauf umzuschalten.

Auf dem Markt sind Prozessoren erhältlich, in die eine Lösung für dieses Problem integriert ist. Diese weisen auch noch andere vorteilhafte Eigenschaften auf und sind deshalb entsprechend teurer. Nicht überall sind aber diese anderen vorteilhaften Eigenschaften auch erforderlich und damit der höhere Preis gerechtfertigt. Das Nachladen des neuen Betriebssystems in einen noch freien Speicherbereich mit eigener Adressierung und anschließende Umschaltung durch Berücksichtigung dieser eigenen Adressierung ist praktisch nicht durchführbar, da ein Neustart nie ganz ausgeschlossen ist und bei einem Neustart unterschiedliche Adressen nicht berücksichtigt werden können. Die Verwendung zweier paralleler, umschaltbarer Speicherblöcke mit gleichen Adressen führt dagegen dazu, daß der jeweils inaktive Speicherblock nicht vom selben Prozessor aus adressierbar ist und deshalb das Nachladen des neuen Betriebssystems nur eingeschränkt möglich ist.

Der Erfindung liegt die Aufgabe zugrunde, eine preisgünstige Lösung für das genannte Problem anzugeben.

Diese Aufgabe wird erfindungsgemäß gelöst durch eine programmgesteuerte Einrichtung nach der Lehre des Anspruchs 1.

Dabei werden zwei getrennte Speicherbereiche verwendet, deren Adressen durch Umschalter gegeneinander austauschbar sind.

Weitere Ausgestaltungen der Erfindung sind den Unteransprüchen und der nachfolgenden Beschreibung zu entnehmen.

Im folgenden wird die Erfindung unter Zuhilfenahme der beiliegenden Zeichnungen weiter erläutert:
- Figur 1: zeigt die Organisation des Datenspeichers einer erfindungsgemäßen Einrichtung.
- Figur 2: zeigt ein Ausführungsbeispiel einer erfindungsgemäßen Einrichtung.

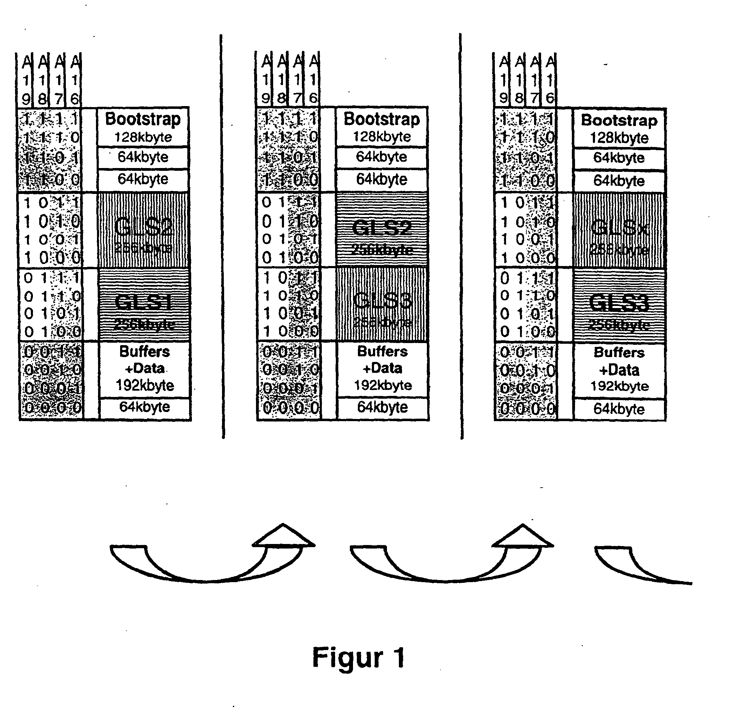

Anhand der Figur 1 wird zunächst die Organisation des Datenspeichers einer erfindungsgemäßen programmgesteuerten Einrichtung und damit der Grundgedanke der Erfindung erläutert. Figur 1 zeigt von links nach rechts drei aufeinanderfolgende Betriebssituationen, bei denen jeweils eine andere Version des Betriebssystems aktiv ist. Die darunter angeordneten Übergangspfeile sind in sich verdreht und deuten damit eine dabei erfolgende Vertauschung an.

Jede der drei nebeneinanderliegenden Darstellungen zeigt links die vier höchstwertigen Adressbits und rechts den Speicheraufbau. Gezeigt ist dabei nur derjenige Teil des Speichers, der das Betriebssystem enthält, sowie der zugehörige Teil des Adreßbereichs.

Der Speicher ist in vier gleich große Bereiche aufgeteilt, die je 256 kbyte umfassen und deren zwei höchstwertige Bits, die Adreßbits A18 und A19, die Werte 00, 01, 10 und 11 annehmen. Der unterste und der oberste dieser vier Speicherbereiche sind weiter unterteilt in Blöcke zu je 64 kbyte, die wiederum teilweise zu Blöcken von 128 kbyte und 192 kbyte zusammengefaßt sind. Der oberste dargestellte Block trägt die Bezeichnung "Bootstrap" und enthält den für den Start des Programms erforderlichen Programmteil. Ein anderer Block trägt die Bezeichnung "Buffers+Data". Er ist als Zwischenspeicher und für anfallende Daten vorgesehen. Drei weitere Blöcke enthalten nur die Angabe ihrer Größe und keine Angabe über ihren Verwendungszweck. Diese bisher genannten Blöcke werden von der vorliegenden Erfindung nicht erfaßt. Diese berücksichtigt aber das Vorhandensein solcher weiterer Blöcke.

Von der vorliegenden Erfindung erfaßt werden dagegen die zwei großen mittleren Blöcke, die je 256 kbyte umfassen und die Bezeichnung für ein im Beispiel verwendetes Betriebssystem GLS mit nachfolgender Versionsnummer, also GLS1, GLS2, GLS3 und GLSx tragen.

Die Adreßbits sind teilweise grau unterlegt und teilweise nicht. Der grau unterlegte Teil bleibt grundsätzlich unverändert, der nicht unterlegte Teil wird erfindungsgemäß verändert.

Durch die erfindungsgemäße Umschaltung von Adreßleitungen werden vom Prozessor immer dieselben Adressen verwendet, während am Speicher unterschiedliche Adressen anliegen. Die Darstellung in Figur 1 gibt graphisch die Anordnung im Speicher wieder, während durch die eingetragenen Adreßbits die Adressierung durch den Prozessor angegeben wird.

Zunächst wird mit dem Betriebssystem GLS1 gearbeitet, das in demjenigen Speicherbereich abgelegt ist, das im Speicher die beiden höchstwertigen Adreßbits 01 trägt und vom Prozessor auch mit diesen Adreßbits erreicht wird. Während der Arbeit mit diesem Betriebssystem GLS1 ist es möglich, im Speicherbereich mit den beiden höchstwertigen Adreßbits 10 das nächste Betriebssystem GLS2 zu laden. Das Betriebssystem GLS2 wird zwar vom Betriebssystem GLS1 aus erreicht, wird aber nicht als Betriebssystem interpretiert, weil es vom Prozessor nicht unter den dafür vorgesehenen Adressen erreicht wird. In der Darstellung in Figur 1 ist die Bezeichnung für das jeweils aktive Betriebssystem fett dargestellt; es ist mit einer waagerechten Schraffur unterlegt. Das jeweils inaktive Betriebssystem ist senkrecht schraffiert unterlegt und mit normaler Schrift beschriftet:

Soll nun vom Betriebssystem GLS1 zum Betriebssystem GLS2 umgeschaltet werden, so werden die für die Adreßbits A18 und A19 zuständigen Adreßleitungen gegeneinander vertauscht. Damit ist erreicht, daß der Prozessor bei gleicher Adressierung jetzt denjenigen Speicherbereich erreicht, in dem das Betriebssystem GLS2 abgelegt ist. Damit ist nun das Betriebssystem GLS2 aktiv und das Betriebssystem GLS1 außer Betrieb gesetzt. Selbstverständlich könnte auf die gleiche Art wieder auf das Betriebssystem GLS1 zurückgeschaltet werden. In gleicher Weise dargestellt ist der Übergang auf ein Betriebssystem GLS3 und ein beliebiges weiteres Betriebssystem GLSx.

Bei der beschriebenen Art der Umschaltung werden zwar auch die Adreßleitungen für den oberen und den unteren Speicherbereich vertauscht, da diese Adreßleitungen hierfür jedoch untereinander gleich sind, nämlich entweder zweimal die "0" oder zweimal die "1", ändert sich für diese Speicherbereiche nichts durch die Vertauschung.

Im dargestellten Fall sind zwei aufeinanderfolgende Adreßleitungen gegeneinander tauschbar. Die Wertigkeit der niedrigerwertigen der beiden Adreßleitungen, hier A18, entspricht dabei dem Umfang eines jeden der zwei auszutauschenden Speicherbereiche, hier 2 hoch 18 gleich 256, entsprechend 256 kbyte.

Grundsätzlich könnte die Umschaltung auch anders erfolgen, beispielsweise durch Umwertung mittels einer in einem ROM oder PROM abgelegten Tabelle. Beispielsweise könnten die vom Prozessor kommenden Adreßleitungen A16 - A19 auf vier Adreßeingänge dieses Umwerters gelegt werden und über vier Datenausgangsleitungen dieses Umwerters jeder der möglichen Kombinationen von Eingangsadressen eine an den Speicher anzulegende Adresse zugeordnet werden. Die Umschaltung müßte dabei durch ein Umschaltsignal erfolgen, das an einen weiteren Adreßeingang des Umwerters angelegt wird. Eine derartige Umschaltung durch Umwertung hätte nicht nur den Vorteil, daß auch eine feinere Abstufung der Größe der umzuschaltenden Speicherbereiche möglich wäre, sondern es könnte zusätzlich die Möglichkeit geschaffen werden, zwischen mehr als zwei Betriebssystemen umzuschalten. Hierzu müßte eben ein Umschaltsignal mit mehr als einem Bit an mehr als einen weiteren Adreßeingang angelegt werden.

Natürlich muß sichergestellt sein, daß nach dem Umschalten ein definierter Zustand eingenommen wird. Es darf nicht einfach von einer beliebigen Stelle im einen Betriebssystem zu derjenigen Stelle im anderen Betriebssystem gesprungen werden, die gerade die gleiche Adresse besitzt. Im einfachsten Fall wird die Umschaltung mit einem Neustart verbunden. Dieser Neustart kann aber ohne jede Programmunterbrechung unmittelbar auf den Abbruch des vorangehenden Programms folgen.

Die Frage, wie die Umschaltung ausgelöst wird, ist dabei von untergeordneter Bedeutung. Infrage kommen beispielsweise programmgesteuerte, manuelle oder ereignisgesteuerte Umschaltungen. Für die programmgesteuerte Umschaltung wird nachfolgend ein Beispiel beschrieben. Eine manuelle Umschaltung kann beispielsweise durch einen Rastschalter erfolgen, der in jeder der beiden Stellungen noch über ein Monoflop einen Soft-Reset auslöst. Als ereignisgesteuerte Umschaltung kommt beispielsweise eine Fern-Umschaltung in Frage.

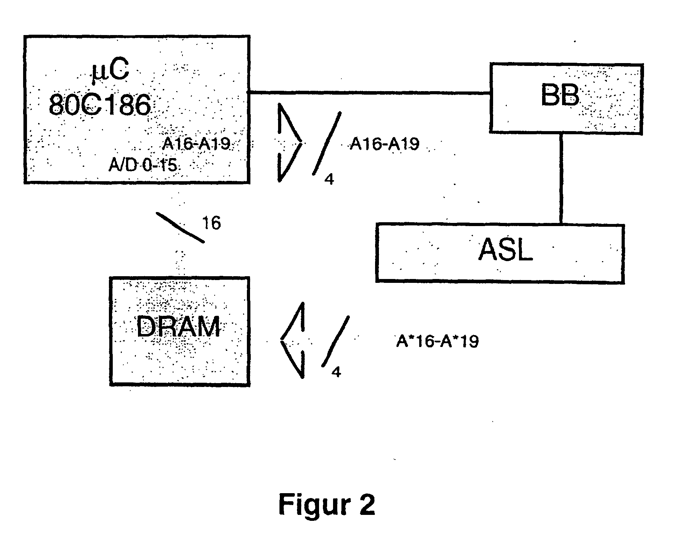

Anhand der Figur 2 wird noch eine erfindungsgemäße Einrichtung beschrieben, die für eine programmgesteuerte Umschaltung geeignet ist.

Die Einrichtung nach Figur 2 weist einen Prozessor µC, einen Programmspeicher DRAM, eine Adress-Schalt-Logik ASL und einen Ein-Bit-Speicher BB zur Ansteuerung der Adress-Schalt-Logik ASL auf.

Der Prozessor µC (hier ist beispielhaft der Typ 80C186 angegeben) ist über einen 16 Bit breiten kombinierten Adress- und Datenbus A/D0-15 direkt mit dem Programmspeicher DRAM und über einen 4 Bit breiten, reinen Adressbus A16-A19 indirekt, über die Adress-Schalt-Logik ASL, mit dem Programmspeicher DRAM verbunden. In der Adress-Schalt-Logik ASL können die Adreßleitungen A18 und A19 gegeneinander vertauscht werden. Die Adreßleitungen A16 und A17 werden in diesem Beispiel nicht beeinflußt. Ob die Adress-Schalt-Logik ASL die Adreßleitungen A18 und A19 gegeneinander vertauscht oder nicht, hängt vom Ausgang des Ein-Bit-Speichers BB ab, welcher wiederum vom Prozessor µC gezielt gesetzt werden kann.

Je nachdem, ob der Ein-Bit-Speicher BB seinen Inhalt bei Spannungsunterbrechung verliert oder nicht, kann diese Umschaltmöglichkeit entweder nur für Umschaltungen während des Betriebs verwendet werden oder auch für dauernde Umschaltungen. Wenn keine dauerhafte Speicherung vorliegt, kann anstelle des Ein-Bit-Speichers BB auch ein Zwei-Bit-Speicher und als Adress-Schalt-Logik eine wie oben beschrieben umwertende Logik verwendet werden, wobei dann bei Spannungsunterbrechung immer ein Basisbetriebssystem aktiv wird, von dem aus dann auf eines von zwei oder drei anderen umgeschaltet werden kann.

Für die Ausgestaltung der genannten Bauelemente sowie die möglichen Abwandlungen des beschriebenen Beispiels stehen dem Fachmann genügend Varianten zur Verfügung.

In der vorliegenden Beschreibung wurde im wesentlichen immer das Betriebssystem angesprochen. Aus dem vorliegend beschriebenen wird aber deutlich, daß hier jedes Programm oder Programmteil auf die erfindungsgemäße Art adressiert werden kann. Hier erfolgt eine sehr direkte Art der Adressierung, bei der ein bestimmtes Programmteil auch in verschiedenen Programmversionen vom Prozessor aus unter der gleichen Adresse erreicht wird.

## Patentansprüche

1. Programmgesteuerte Einrichtung mit Nachlademöglichkeit für und Umschaltemöglichkeit auf zweites Betriebssystem (GLS1, GLS2, GLS3, GLSx) ohne Programmunterbrechung mit einem Prozessor (µC) und mit einem vom Prozessor über Adreßleitungen (A/D0-15, A16-A19) adressierbaren Programmspeicher (DRAM), **dadurch gekennzeichnet, daß** ein schaltbarer Umschalter (ASL) in den Adreßleitungen vorhanden ist, mittels dessen durch Umwertung zwei Speicherbereiche (01xx, 10xx) derart gegeneinander austauschbar sind, daß dadurch jeder Speicherbereich diejenigen Adressen erhält, die wobei der andere Speicherbereich hatte und umgekehat.

2. Programmgesteuerte Einrichtung nach Anspruch 1, **dadurch gekennzeichnet, daß** der schaltbare Umschalter programmgesteuert umschaltbar ist.

3. Programmgesteuerte Einrichtung nach Anspruch 1, **dadurch gekennzeichnet, daß** der schaltbare Umschalter manuell umschaltbar ist.

4. Programmgesteuerte Einrichtung nach Anspruch 1, **dadurch gekennzeichnet, daß** der schaltbare Umschalter ereignisgesteuert umschaltbar ist.

5. Programmgesteuerte Einrichtung nach Anspruch 1, **dadurch gekennzeichnet, daß** der schaltbare Umschalter zwei Adreßleitungen (A19, A18) gegeneinander vertauscht.

6. Programmgesteuerte Einrichtung nach Anspruch 5, **dadurch gekennzeichnet, daß** die zwei durch den schaltbaren Umschalter gegeneinander vertauschbaren Adreßleitungen für Adreßbits aufeinanderfolgender Wertigkeit bestimmt sind und daß das davon niedrigerwertige Adreßbit eine Wertigkeit aufweist, die gleich dem Umfang jedes der zwei auszutauschenden Speicherbereiche ist.

## Claims

1. Program-controlled device with the capability of upgrading the operating system and switching to a second operating system (GLS1, GLS2, GLS3, GLSx) without program interruption with a processor (µC) and with a program memory (DRAM) that can be addressed by the processor over address lines (A/D0-15, A16-A19), **characterized in that** a switchable changeover switch (ASL) is present in the address lines and by means of this two memory areas (01xx, 10xx) can be swapped for each other by translation in such a way that each memory area is thereby given the addresses which the other memory area previously had, and conversely.

2. Program-controlled device according to Claim 1, **characterized in that** the switchable changeover switch can be switched under program control.

3. Program-controlled device according to Claim 1, **characterized in that** the switchable changeover switch can be switched manually.

4. Program-controlled device according to Claim 1, **characterized in that** the switchable changeover switch can be switched under event control.

5. Program-controlled device according to Claim 1, **characterized in that** the switchable changeover switch swaps two address lines (A19, A18) for each other.

6. Program-controlled device according to Claim 5, **characterized in that** the two address lines that can be swapped for each other by the switchable changeover switch are intended for address bits of successive value, and that the lower-order address bit has a value that is equal to the size of each of the two memory areas to be swapped.

## Revendications

1. Dispositif commandé par programme avec la possibilité de charger ultérieurement ou de basculer sur un deuxième système d'exploitation (GLS1, GLS2, GLS3, GLSx) sans interruption de programme avec un processeur (µC) et avec une mémoire de programme adressable (DRAM) par le processeur par l'intermédiaire de lignes d'adresses (A/D0-15, A16-A19), **caractérisé en ce qu'**un dispositif de basculement commutable (ASL) existe sur les lignes d'adresse au moyen duquel deux zones de mémoire (01xx, 10xx) sont mutuellement échangeables par conversion de telle sorte qu'ainsi chaque zone de mémoire contient les adresses qu'avait l'autre zone de mémoire auparavant, et vice versa.

2. Dispositif commandé par programme selon la revendication 1, **caractérisé en ce que** le dispositif de basculement commutable peut être commuté de façon commandé par programme.

3. Dispositif commandé par programme selon la revendication 1, **caractérisé en ce que** le dispositif de basculement commutable peut être commuté de façon manuelle.

4. Dispositif commandé par programme selon la revendication 1, **caractérisé en ce que** le dispositif de basculement commutable peut être commuté de façon commandée par événement.

5. Dispositif commandé par programme selon la revendication 1, **caractérisé en ce que** le dispositif de basculement commutable échange mutuellement deux lignes d'adresses (A19, A18).

6. Dispositif commandé par programme selon la revendication 5, **caractérisé en ce que** les deux lignes d'adresse mutuellement échangeables par le dispositif de basculement commutable sont destinées à des bits d'adresse de valence consécutive et **en ce que** le bit d'adresse de poids inférieur de ceux-ci présente une valence qui est égale à la circonférence de chacune des deux zones de mémoire à échanger.
